(19) Europäisches Patentamt
European Patent Office
Office européen des brevets

(11) **EP 2 158 948 A2**

(12) **EUROPEAN PATENT APPLICATION**

(43) Date of publication:
**03.03.2010 Bulletin 2010/09**

(51) Int Cl.:
***A63F 13/10*** *(2006.01)*

(21) Application number: **09166551.3**

(22) Date of filing: **28.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **28.07.2008 JP 2008194205**

(71) Applicant: **NAMCO BANDAI Games Inc.**
**Shinagawa-ku**
**Tokyo 140-8590 (JP)**

(72) Inventor: **Iwanaga, Yoshihito**
**Shinagawa-ku Tokyo 140-8590 (JP)**

(74) Representative: **Emerson, Peter James et al**
**Page Hargrave**
**Whitefriars**
**Lewins Mead**
**Bristol BS1 2NT (GB)**

(54) **Image generation system, image generation method, and information storage medium**

(57)    An image generation system includes a virtual camera control section that controls a virtual camera, a distance calculation section that calculates a distance between the virtual camera and a model object, and a drawing section that draws a plurality of objects including the model object. The drawing section decreases a density of a shadow image that shows a self-shadow or a shadow of another object cast on the model object as the distance between the virtual camera and the model object decreases.

## FIG. 1

**Description**

BACKGROUND

The present invention relates to an image generation system, an image generation method, an information storage medium, and the like.

An image generation system (game system) that generates an image viewed from a virtual camera (given viewpoint) in an object space (virtual three-dimensional space) has been known. Such an image generation system is very popular as a system that allows experience of virtual reality. For example, an image generation system that produces a fighting game allows the player to operate a player's character (model object) using a game controller (operation section) so that the player's character fights against an enemy character operated by another player or a computer to enjoy the game.

Such an image generation system is desired to generate a realistic shadow cast on a model object (e.g., character). As a shadow generation method, a shadowing process such as a shadow volume (modifier volume) process disclosed in JP-A-2003-242523 has been known.

However, a related-art shadow generation method has a problem in which jaggies or the like occur to a large extent along the outline of a self-shadow or a shadow of another object cast on a model object so that the quality of the generated shadow image cannot be improved sufficiently.

SUMMARY

According to one aspect of the invention, there is provided an image generation system that generates an image viewed from a virtual camera in an object space, the image generation system comprising:

a virtual camera control section that controls the virtual camera;
a distance calculation section that calculates a distance between the virtual camera and a model object; and
a drawing section that draws a plurality of objects including the model object,
the drawing section decreasing a density of a shadow image as the distance between the virtual camera and the model object decreases, the shadow image showing a self-shadow or a shadow of another object cast on the model object.

According to another aspect of the invention, there is provided an image generation method that generates an image viewed from a virtual camera in an object space, the image generation method comprising:

controlling the virtual camera;
calculating a distance between the virtual camera and a model object;
drawing a plurality of objects including the model object; and
decreasing a density of a shadow image as the distance between the virtual camera and the model object decreases, the shadow image showing a self-shadow or a shadow of another object cast on the model object.

BRIEF DESCRIPTION OF THE DRAWINGS

FIG. 1 shows an example of a block diagram of an image generation system according to one embodiment of the invention.
FIG. 2 shows an example of an image generated according to one embodiment of the invention.
FIG. 3 shows an example of an image generated according to one embodiment of the invention.
FIG. 4 shows an example of an image generated according to one embodiment of the invention.
FIGS. 5A and 5B are views illustrative of the relationship between the distance L between a virtual camera and a model object and the density of a shadow image.
FIG. 6 is a view illustrative of a shadow map process.
FIG. 7 is a view illustrative of a method of setting a variance adjustment parameter in a variance shadow map process.
FIG. 8 shows an example of an image generated without adjusting a variance adjustment parameter.
FIG. 9 is a view illustrative of a method of controlling the density of a shadow corresponding to virtual camera control.
FIG. 10 is a view illustrative of a method of controlling the density of a shadow corresponding to virtual camera control.
FIG. 11 is a view illustrative of a method of controlling the density of a shadow corresponding to virtual camera control.
FIGS. 12A and 12B are views illustrative of a method of controlling the density of a shadow corresponding to virtual camera control.

FIGS. 13A and 13B are views illustrative of a method of controlling the density of a shadow corresponding to virtual camera control.

FIG. 14 is a flowchart illustrative of a specific process according to one embodiment of the invention.

FIGS. 15A and 15B show hardware configuration examples.

DESCRIPTION OF EXEMPLARY EMBODIMENTS

Several aspects of the invention may provide an image generation system, an image generation method, an information storage medium, and the like that can generate a realistic high-quality shadow image.

According to one embodiment of the invention, there is provided an image generation system that generates an image viewed from a virtual camera in an object space, the image generation system comprising:

a virtual camera control section that controls the virtual camera;
a distance calculation section that calculates a distance between the virtual camera and a model object; and
a drawing section that draws a plurality of objects including the model object,
the drawing section decreasing a density of a shadow image as the distance between the virtual camera and the model object decreases, the shadow image showing a self-shadow or a shadow of another object cast on the model object.

According to this embodiment, the distance between the virtual camera and the model object is calculated. A shadow image that shows a self-shadow or a shadow of another object cast on the model object is generated, and the density of the shadow image is decreased as the distance between the virtual camera and the model object decreases. According to this configuration, jaggies or the like that occur along the shadow image when the virtual camera approaches the model object do not occur to a large extent so that a realistic high-quality shadow image can be generated.

In the image generation system,
the drawing section may generate the shadow image cast on the model object by a shadow map process.

Jaggies or the like may occur to a large extent along the shadow image when generating the shadow image by the shadow map process. However, such a situation can be prevented by decreasing the density of the shadow image corresponding to the distance between the virtual camera and the model object.

In the image generation system,
the drawing section may set a variance adjustment parameter of a variance shadow map process based on the distance between the virtual camera and the model object, and may generate the shadow image cast on the model object by the variance shadow map process.

According to this configuration, the process that controls the density of the shadow image corresponding to the distance between the virtual camera and the model object can be implemented by a simple process that effectively utilizes the variance adjustment parameter.

In the image generation system,
the drawing section may set the variance adjustment parameter so that a variance of the variance shadow map process increases as the distance between the virtual camera and the model object decreases, the variance being used in calculation that obtains the density of the shadow image in the variance shadow map process.

According to this configuration, since the variance in the variance shadow map process is set so that the variance increases as the distance between the virtual camera and the model object decreases, a situation in which jaggies or the like occur to a large extent along the shadow image when the distance between the virtual camera and the model object has decreased can be prevented.

In the image generation system,
the drawing section may decrease the density of the shadow image as a distance L between the virtual camera and the model object decreases when the distance L is shorter than a first distance L1,
the drawing section may increase the density of the shadow image as the distance L increases when the distance L is longer than a second distance L2, and
the drawing section may make the density of the shadow image constant irrespective of the distance between the virtual camera and the model object when the distance L satisfies a relationship "L1≤L≤L2".

According to this configuration, since the density of the shadow image does not change even when the distance L between the virtual camera and the model object has changed when the relationship "L1≤L≤L2" is satisfied, a flicker of the shadow image and the like can be reduced.

In the image generation system,
the virtual camera control section may move the virtual camera away from a first model object and a second model object when a separation event has occurred, the separation event being an event in which a distance between the first model object and the second model object increases, and

the drawing section may increase the density of the shadow image when the separation event has occurred and a distance between the virtual camera and the first model object and the second model object has increased.

According to this configuration, since the density of the shadow image is increased when the separation event has occurred and the distance between the virtual camera and the first model object and the second model object has increased, a situation in which the solidity and the visibility of the first model object and the second model object are impaired can be prevented.

In the image generation system,

the virtual camera control section may move the virtual camera closer to the model object when a zoom event has occurred, the zoom event being an event in which the virtual camera zooms in the model object, and

the drawing section may decrease the density of the shadow image when the zoom event has occurred and the distance between the virtual camera and the model object has decreased.

According to this configuration, since the density of the shadow image is increased when the virtual camera zoom event has occurred and the distance between the virtual camera and the model object has decreased, a situation in which jaggies or the like occur to a large extent along the shadow image can be prevented.

In the image generation system,

the virtual camera control section may move the virtual camera away from a plurality of model objects when a model object count increase event has occurred, the model object count increase event being an event in which the number of model objects positioned within a field of view of the virtual camera increases, and

the drawing section may increase the density of the shadow image when the model object count increase event has occurred and the distance between the virtual camera and the model object has increased.

According to this configuration, since the density of the shadow image is increased when the object count increase event has occurred and the distance between the virtual camera and the model object has increased, a situation in which the solidity and the visibility of the model object are impaired can be prevented.

In the image generation system,

the virtual camera control section may cause the virtual camera to inertially follow movement of the model object; and

the drawing section may increase the density of the shadow image when the distance between the virtual camera and the model object has increased due to a delay in tracking of the virtual camera.

According to this configuration, since the density of the shadow image is decreased when the distance between the virtual camera and the model object has increased due to a delay in tracking of the virtual camera caused by virtual camera inertial tracking control, a situation in which jaggies or the like occur to a large extent along the shadow image can be prevented.

According to anther embodiment of the invention, there is provided an image generation method that generates an image viewed from a virtual camera in an object space, the image generation method comprising:

controlling the virtual camera;
calculating a distance between the virtual camera and a model object;
drawing a plurality of objects including the model object; and
decreasing a density of a shadow image as the distance between the virtual camera and the model object decreases, the shadow image showing a self-shadow or a shadow of another object cast on the model object.

According to another embodiment of the invention, there is provided a computer-readable information storage medium storing a program that causes a computer to execute the above image generation method.

Embodiments of the invention are described below. Note that the following embodiments do not in any way limit the scope of the invention laid out in the claims. Note that all elements of the following embodiments should not necessarily be taken as essential requirements for the invention.

1. Configuration

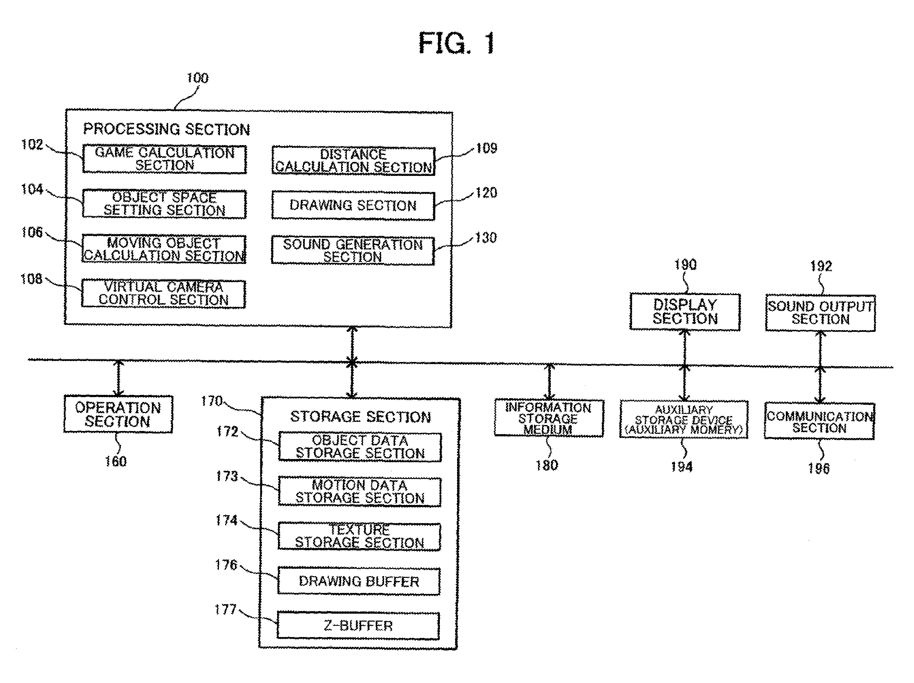

FIG. 1 shows an example of a block diagram of an image generation system (game system) according to one embodiment of the invention. Note that the image generation system according to this embodiment may have a configuration in which some of the elements (sections) shown in FIG. 1 are omitted.

An operation section 160 allows the player to input operation data. The function of the operation section 160 may be implemented by a direction key, an operation button, an analog stick, a lever, a steering wheel, an accelerator, a brake, a microphone, a touch panel display, or the like.

A storage section 170 serves as a work area for a processing section 100, a communication section 196, and the like. The function of the storage section 170 may be implemented by a RAM (DRAM or VRAM) or the like. The storage section 170 may be formed by a volatile memory that loses data when power is removed. The storage section 170 is a storage device that is higher in speed than an auxiliary storage device 194. A game program and game data necessary when executing the game program are stored in the storage section 170.

An information storage medium 180 (computer-readable medium) stores a program, data, and the like. The function of the information storage medium 180 may be implemented by an optical disk (CD or DVD), a hard disk drive (HDD), a memory (e.g., ROM), or the like. The processing section 100 performs various processes according to this embodiment based on a program (data) stored in the information storage medium 180. Specifically, a program that causes a computer (i.e., a device including an operation section, a processing section, a storage section, and an output section) to function as each section according to this embodiment (i.e., a program that causes a computer to execute the process of each section) is stored in the information storage medium 180.

A display section 190 outputs an image generated according to this embodiment. The function of the display section 190 may be implemented by a CRT, an LCD, a touch panel display, a head mount display (HMD), or the like. A sound output section 192 outputs sound generated according to this embodiment. The function of the sound output section 192 may be implemented by a speaker, a headphone, or the like.

The auxiliary storage device 194 (auxiliary memory or secondary memory) is a mass storage device used to supplement the capacity of the storage section 170. The auxiliary storage device 194 may be implemented by a memory card such as an SD memory card or a multimedia card, an HDD, or the like. The auxiliary storage device 194 is removable, but may be incorporated in the image generation system. The auxiliary storage device 194 is used to store save data (e.g., game results), player's (user's) personal image data and music data, and the like.

The communication section 196 communicates with the outside (e.g., another image generation system, a server, or a host device) via a cable or wireless network. The function of the communication section 196 may be implemented by hardware such as a communication ASIC or a communication processor or communication firmware.

A program (data) that causes a computer to function as each section according to this embodiment may be distributed to the information storage medium 180 (or the storage section 170 or the auxiliary storage device 194) from an information storage medium of a server (host device) via a network and the communication section 196. Use of the information storage medium of the server (host device) is also included within the scope of the invention.

The processing section 100 (processor) performs a game process, an image generation process, a sound generation process, and the like based on operation data from the operation section 160, a program, and the like. The processing section 100 performs various processes using the storage section 170 as a work area. The function of the processing section 100 may be implemented by hardware such as a processor (e.g., CPU or GPU) or ASIC (e.g., gate array) and a program.

The processing section 100 includes a game calculation section 102, an object space setting section 104, a moving object calculation section 106, a virtual camera control section 108, a distance calculation section 109, a drawing section 120, and a sound generation section 130. Note that the processing section 100 may have a configuration in which some of these sections are omitted.

The game calculation section 102 performs a game calculation process. The game calculation process includes starting the game when game start conditions have been satisfied, proceeding with the game, calculating the game results, and finishing the game when game finish conditions have been satisfied, for example.

The object space setting section 104 disposes an object (i.e., an object formed by a primitive surface such as a polygon, a free-form surface, or a subdivision surface) that represents a display object such as a model object (i.e., a moving object such as a human, robot, car, fighter aircraft, missile, or bullet), a map (topography), a building, a course (road), a tree, or a wall in an object space. Specifically, the object space setting section 104 determines the position and the rotational angle (synonymous with orientation or direction) of the object in a world coordinate system, and disposes the object at the determined position (X, Y, Z) and the determined rotational angle (rotational angles around X, Y, and Z axes). Specifically, an object data storage section 172 of the storage section 170 stores object data that indicates the object's position, rotational angle, moving speed, moving direction, and the like corresponding to an object number. The object data is sequentially updated by a moving object calculation process of the moving object calculation section 106 and the like.

The moving object calculation section (moving object control section) 106 performs calculations for moving the model object (moving object) or the like. The moving object calculation section 106 also performs calculations for causing the model object to make a motion. Specifically, the moving object calculation section 106 causes the model object (moving object) to move in the object space or causes the model object to make a motion (animation) based on operation data input by the player using the operation section 160, a program (movement/motion algorithm), various types of data (motion data), and the like. More specifically, the moving object calculation section 106 performs a simulation process that sequentially calculates movement information (position, rotational angle, speed, or acceleration) and motion information (position or rotational angle of a part object) of the model object every frame (1/60th of a second). The term "frame" refers to a time unit when performing an object movement/motion process (simulation process) or an image generation process.

The moving object calculation section 106 reproduces the motion of the model object based on motion data stored in a motion data storage section 173. Specifically, the moving object calculation section 106 reads motion data including the position or the rotational angle (direction) of each part object (i.e., a bone that forms a skeleton) that forms the model object (skeleton) from the motion data storage section 173. The moving object calculation section 106 reproduces the motion of the model object by moving each part object (bone) of the model object (i.e., changing the shape of the skeleton).

The virtual camera control section 108 controls a virtual camera (viewpoint) for generating an image viewed from a given (arbitrary) viewpoint in the object space. Specifically, the virtual camera control section 108 controls the position (X, Y, Z) or the rotational angle (rotational angles around X, Y, and Z axes) of the virtual camera (i.e., controls the viewpoint position, the line-of-sight direction, or the angle of view).

For example, when photographing the model object (e.g., character, car, or fighter aircraft) from behind using the virtual camera, the virtual camera control section 108 controls the position or the rotational angle (direction) of the virtual camera so that the virtual camera follows a change in the position or the rotation of the model object. In this case, the virtual camera control section 108 may control the virtual camera based on information (e.g., position, rotational angle, or speed) of the model object obtained by the moving object calculation section 106. Alternatively, the virtual camera control section 108 may rotate the virtual camera by a predetermined rotational angle, or may move the virtual camera along a predetermined path. In this case, the virtual camera control section 108 controls the virtual camera based on virtual camera data that specifies the position (moving path) or the rotational angle of the virtual camera.

The distance calculation section 109 calculates the distance (distance information) between the virtual camera and the model object. For example, the distance calculation section 109 calculates the distance between the virtual camera (viewpoint) and a representative point (e.g., a representative point set on the waist or chest) of the model object. The distance may be the linear distance between the virtual camera and the model object (representative point), or may be a parameter equivalent to the linear distance. For example, the distance may be the distance between the virtual camera and the model object in the depth direction.

The drawing section 120 (image generation section) draws a plurality of objects including the model object (drawing process). For example, the drawing section 120 performs the drawing process based on the results of various processes (game process or simulation process) performed by the processing section 100 to generate an image, and outputs the generated image to the display section 190. When generating a three-dimensional game image, the drawing section 120 generates vertex data (e.g., vertex position coordinates, texture coordinates, color data, normal vector, or alpha value) of each vertex of the model (object), and performs a vertex process (shading using a vertex shader) based on the vertex data. When performing the vertex process, the drawing section 120 may perform a vertex generation process (tessellation, surface division, or polygon division) for dividing the polygon, if necessary.

In the vertex process (vertex shader process), the drawing section 120 performs a vertex moving process and a geometric process such as coordinate transformation (world coordinate transformation or camera coordinate transformation), clipping, or perspective transformation based on a vertex processing program (vertex shader program or first shader program), and changes (updates or adjusts) the vertex data of each vertex that forms the object based on the processing results. The drawing section 120 then performs a rasterization process (scan conversion) based on the vertex data changed by the vertex process so that the surface of the polygon (primitive) is associated with pixels. The drawing section 120 then performs a pixel process (shading using a pixel shader or a fragment process) that draws the pixels that form the image (fragments that form the display screen).

In the pixel process (pixel shader process), the drawing section 120 determines the drawing color of each pixel that forms the image by performing various processes such as a process of reading a texture stored in the texture storage section 174 (texture mapping), a color data setting/change process, a translucent blending process, and an anti-aliasing process based on a pixel processing program (pixel shader program or second shader program), and outputs (draws) the drawing color of the model subjected to perspective transformation to a drawing buffer 176 (i.e., a buffer that can store image information corresponding to each pixel; VRAM, rendering target, or frame buffer). Specifically, the pixel process includes a per-pixel process that sets or changes the image information (e.g., color, normal, luminance, and alpha value) corresponding to each pixel. The drawing section 120 thus generates an image viewed from the virtual camera (given viewpoint) in the object space.

The vertex process and the pixel process are implemented by hardware that enables a programmable polygon (primitive) drawing process (i.e., a programmable shader (vertex shader and pixel shader)) based on a shader program written in shading language. The programmable shader enables a programmable per-vertex process and per-pixel process to increase the degree of freedom of the drawing process so that the representation capability can be significantly improved as compared with a fixed drawing process using hardware.

The drawing section 120 performs a lighting process (shading process) based on an illumination model and the like. Specifically, the drawing section 120 performs the lighting process using light source information (e.g., light source vector, light source color, brightness, and light source type), the line-of-sight vector of the virtual camera (viewpoint), the normal vector of the object (semitransparent object), the material (color and material) of the object, and the like. Examples of the illumination model include a Lambertian illumination model that takes account of only ambient light and diffused light, a Phong illumination model that takes account of specular light in addition to ambient light and diffused light, a Blinn-Phong illumination model, and the like.

The drawing section 120 maps a texture onto the object (polygon). Specifically, the drawing section 120 maps a texture (texel value) stored in the texture storage section 174 onto the object. More specifically, the drawing section 120 reads a texture (surface properties such as the color and the alpha value) from the texture storage section 174 using the texture coordinates set (assigned) to the vertices and the pixels of the object (primitive surface) and the like. The drawing section 120 then maps the texture (i.e., a two-dimensional image or pattern) onto the object. In this case, the drawing section 120 associates the pixels with the texels, and performs bilinear interpolation (texel interpolation in a broad sense) and the like.

The drawing section 120 also performs a hidden surface removal process. For example, the drawing section 120 performs the hidden surface removal process by a Z-buffer method (depth comparison method or Z-test) using a Z-buffer 177 (depth buffer) that stores the Z-value (depth information) of each pixel. Specifically, the drawing section 120 refers to the Z value stored in the Z-buffer 177 when drawing each pixel of the primitive surface of the object. The drawing section 120 compares the Z-value stored in the Z-buffer 177 with the Z-value of the drawing target pixel. When the Z-value of the drawing target pixel is a Z-value in front of the virtual camera, the drawing section 120 draws the pixel and updates the Z-value stored in the Z buffer 177 with a new Z-value.

The drawing section 120 also performs a shadowing process that generates a shadow image. In this embodiment, the drawing section 120 controls the density(intensity, strength, depth) of a shadow image that shows a self-shadow or a shadow of another object cast on the model object corresponding to the distance between the virtual camera and the model object. For example, the drawing section 120 decreases the density of the shadow image cast on the model object as the distance between the virtual camera and the model object decreases. In other words, the drawing section 120 increases the density of the shadow image cast on the model object as the distance between the virtual camera and the model object increases.

In this embodiment, the drawing section 120 generates a shadow image (self-shadow or a shadow of another object) cast on the model object by a shadow map process, for example. The drawing section 120 generates a shadow map texture by rendering the Z-value of the object in the shadow projection direction, for example. The drawing section 120 draws the object using the shadow map texture and the texture of the object to generate a shadow image.

Specifically, the drawing section 120 generates a shadow image by a variance shadow map process, for example. In this case, the drawing section 120 sets a variance adjustment parameter (variance bias value) of the variance shadow map process based on the distance between the virtual camera and the model object, and generates a shadow image cast on the model object by the variance shadow map process. For example, the drawing section 120 sets the variance adjustment parameter so that the variance used to calculate the density of the shadow image in the variance shadow map process increases as the distance between the virtual camera and the model object decreases. As the shadow map process, various processes such as a conventional shadow map process, light space shadow map process, or opacity shadow map process may be used instead of the variance shadow map process. Alternatively, a shadowing process such as a volume shadow (stencil shadow) process or a projective texture shadow process may be used instead of the shadow map process.

The virtual camera control section 108 moves the virtual camera away from a first model object (first character) and a second model object (second character) when a separation event in which the distance between the first model object and the second model object increases has occurred. When the separation event has occurred, the drawing section 120 sets the variance adjustment parameter and the like to increase the density of the shadow image.

The virtual camera control section 108 moves the virtual camera closer to the model object when a zoom event in which the virtual camera zooms in the model object has occurred. When the zoom event has occurred, the drawing section 120 decreases the density of the shadow image.

The virtual camera control section 108 moves the virtual camera away from a plurality of model objects when a model object count increase event in which the number of model objects positioned within the field of view of the virtual camera increases has occurred. When the model object count increase event has occurred, the drawing section 120 increases the density of the shadow image.

The virtual camera control section 108 causes the virtual camera to inertially follow the movement of the model object. The drawing section 120 increases the density of the shadow image when the distance between the virtual camera and the model object has increased due to a delay in tracking of the virtual camera.

2. Method according to this embodiment

2.1 Control of density of shadow corresponding to distance

In order to implement realistic image representation of a model object (e.g., character), it is desirable to realistically depict an image of a self-shadow and a shadow of another object cast on the model object. A shadow map process, a volume shadow process, and the like described later may be used to generate a realistic shadow image.

In a fighting game or the like, first and second characters (model objects) confront and fight against each other. A virtual camera is normally set at a viewpoint position at which the first and second characters are positioned within the field of view to generate a field-of-view image.

In this case, the surface image of the model object need not necessarily have high quality when displaying a field-of-view image in which the viewpoint position is relatively distant from the first and second characters. However, when one of the first and second characters has defeated the other character and the virtual camera has been moved closer to the winner character in order to zoom in the winner character, for example, the quality of the field-of-view image deteriorates if the surface image of the character has low quality so that the player cannot experience sufficient virtual reality. For example, when the number of polygons that form the character is small, the polygon boundary or the like becomes visible when zooming in the character. In order to solve such a problem, the luminance of the entire polygon is increased when zooming in the character to prevent the polygon boundary from becoming visible, for example.

In recent years, it has become easy to increase the number of polygons of a character along with an improvement in hardware performance of an image generation system. Therefore, jaggies or the like at the polygon boundary do not occur to a large extent even if the above-mentioned measures are taken. However, it was found that the quality of a shadow image (e.g., a self-shadow of a character) deteriorates to a large extent when zooming in the character.

In order to solve this problem, this embodiment employs a method that controls the density(intensity, strength, depth) of a shadow cast on the model object corresponding to the distance between the virtual camera and the model object. Specifically, the density of a shadow image that shows a self-shadow or a shadow of another object (e.g., weapon, protector, or another character) cast on the model object is decreased as the distance between the virtual camera and the model object decreases.

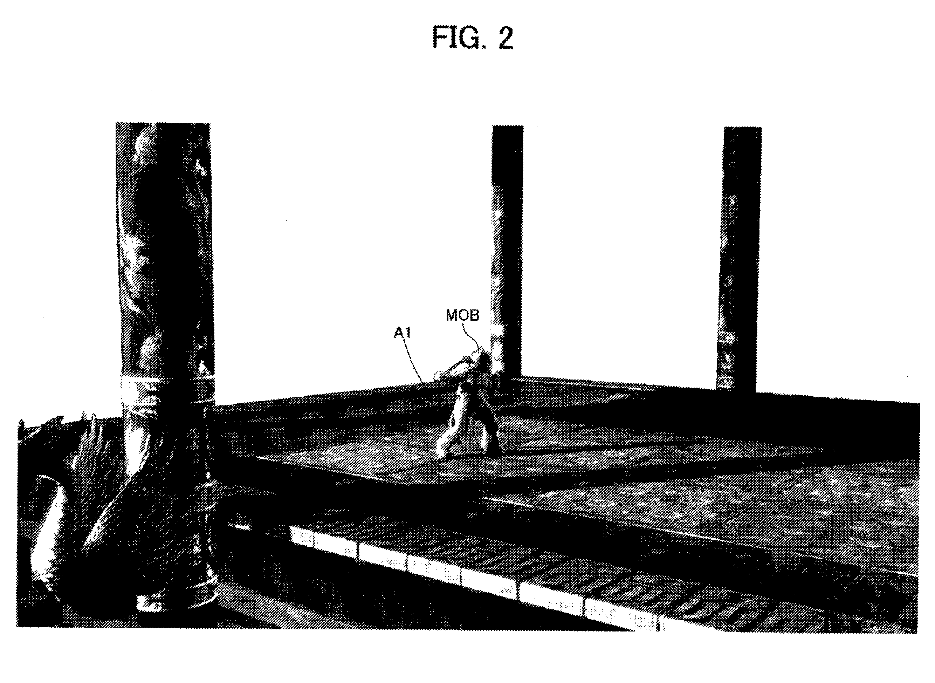

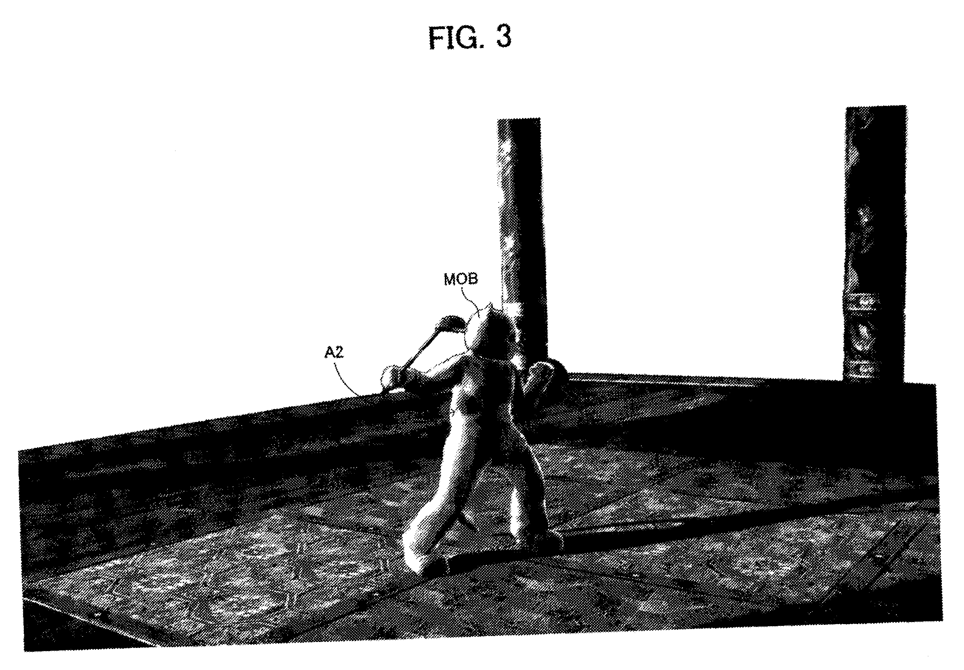

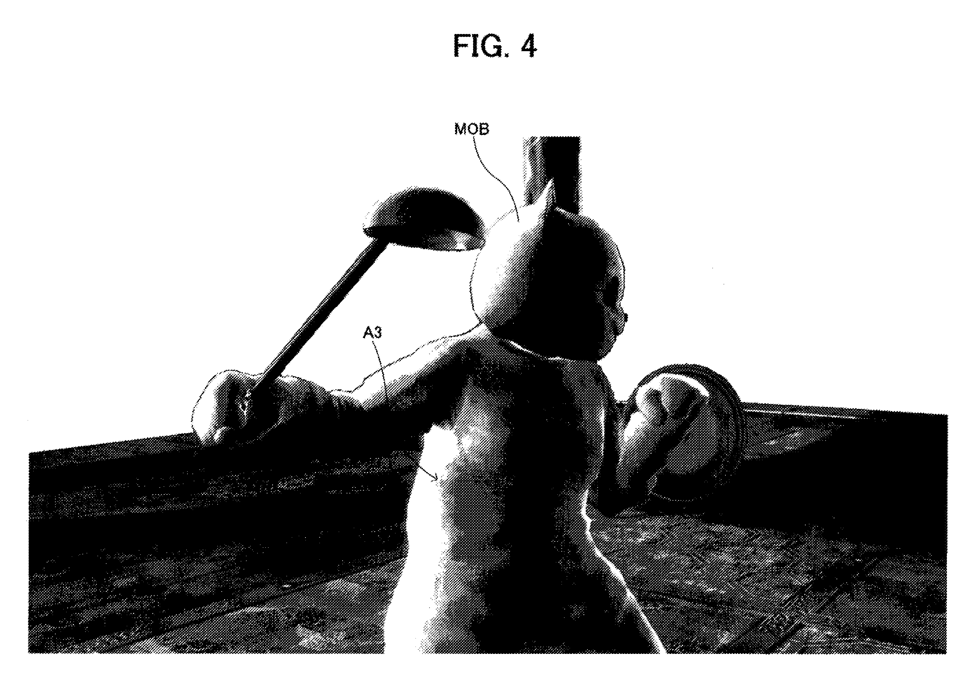

FIGS. 2 to 4 show examples of an image (game image) generated according to this embodiment. FIG. 2 shows an image when the virtual camera is distant from a model object MOB. FIG. 3 shows an image when the distance between the virtual camera and the model object MOB is medium. FIG. 4 shows an image when the virtual camera is close to the model object MOB.

In FIG. 2, since the virtual camera is distant from the model object MOB, the image of the shadow (e.g., a self-shadow of the hand) cast on the model object MOB has a high density (see A1).

In FIG. 3, since the virtual camera is positioned closer to the model object MOB as compared with FIG. 2, the density of the shadow image cast on the model object MOB is lower than that shown in FIG. 2 (see A2). When the virtual camera is further moved closer to the model object MOB (FIG. 4), the density of the shadow image is further decreased so that the shadow image becomes blurred (see A3).

For example, if the shadow cast on the model object MOB has a low density when the virtual camera is distant from the model object MOB, the model object MOB merges into the background so that the solidity and the visibility of the model object MOB are impaired.

In FIG. 2, the density of the shadow cast on the model object MOB is increased when the virtual camera is distant from the model object MOB (see A1). Therefore, since the model object MOB does not merge into the background and exhibits solidity, a situation in which the visibility of the model object MOB is impaired can be prevented.

If the shadow cast on the model object MOB has a high density when the virtual camera has approached the model object MOB, jaggies or the like occur to a large extent along the outline of the shadow so that a realistic image cannot be generated when the virtual camera zooms in the model object MOB. In particular, since the shadow map process described in detail later determines a shadow area by comparing the Z-value of the shadow map with the Z-value of the pixel, jaggies or the like occur to a large extent along the outline of the shadow image. Such jaggies or the like can be reduced to some extent by utilizing the variance shadow map process. However, the effect of the variance shadow map process is limited. In FIG. 4, the density of the shadow cast on the model object MOB is decreased when the virtual camera is positioned close to the model object MOB (see A3). Therefore, even if jaggies or the like occur along the shadow image, the jaggies or the like become invisible since the density of the entire shadow decreases. This makes it possible to provide a high-quality surface image even when the virtual camera zooms in the model object MOB so that virtual reality experienced by the player can be improved.

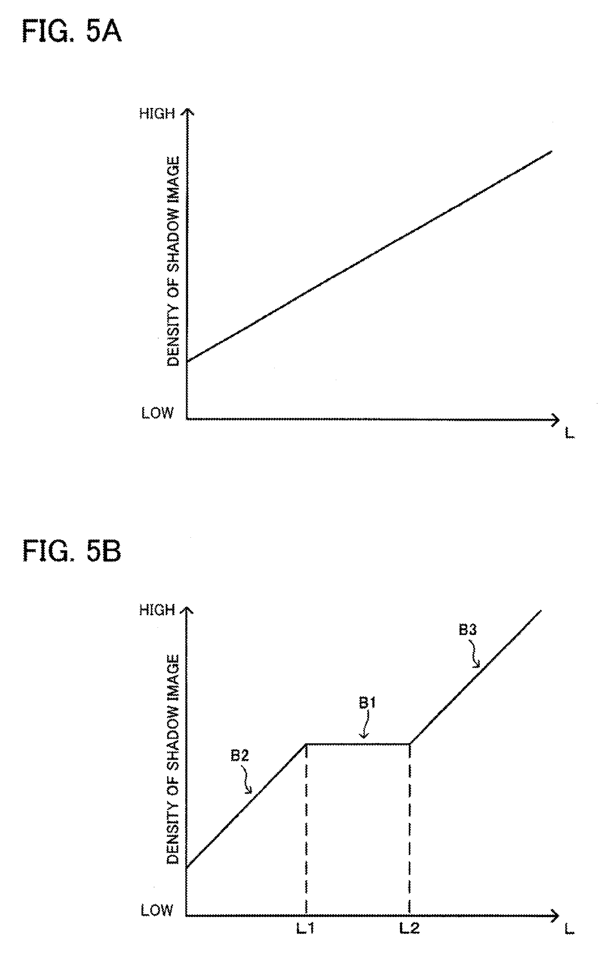

FIG. 5A shows an example of the relationship between the distance L between the virtual camera and the model object and the density of the shadow image cast on the model object. As shown in FIG. 5A, the density of the shadow image decreases (i.e., the attenuation increases) as the distance L between the virtual camera and the model object decreases. In other words, the density of the shadow image increases as the distance increases. In FIG. 5A, the distance L and the density of the shadow image have a linear function relationship. Note that this embodiment is not limited thereto. For example, the distance L and the density of the shadow image may have an nth order function relationship (n>2), an exponential function relationship, a logarithmic function relationship, or the like.

A dead zone in which the density of the shadow image does not change with respect to a change in the distance L may be provided (see B1 in FIG. 5B). Specifically, the density of the shadow image is decreased as the distance L between the virtual camera and the model object decreases when the distance L is shorter than a first distance L1 (see B2 in FIG. 5B). The density of the shadow image is increased as the distance L increases when the distance L is longer than a second distance L2 (see B3). The density of the shadow image is made constant irrespective of the distance L when the distance L satisfies the relationship "L1≤L≤L2" (see B1).

Taking a fighting game as an example, the distance L between the virtual camera and the first and second characters during a fight is set within the range indicated by B 1 in FIG. 5B. Therefore, the density of the shadow image does not change even when the distance L between the virtual camera and the first and second characters has changed due to a change in the distance between the first and second characters. This effectively prevents a situation in which the density of the shadow image changes frequently when the first and second characters fight against each other so that the visibility of the image is impaired.

2.2 Shadow map process

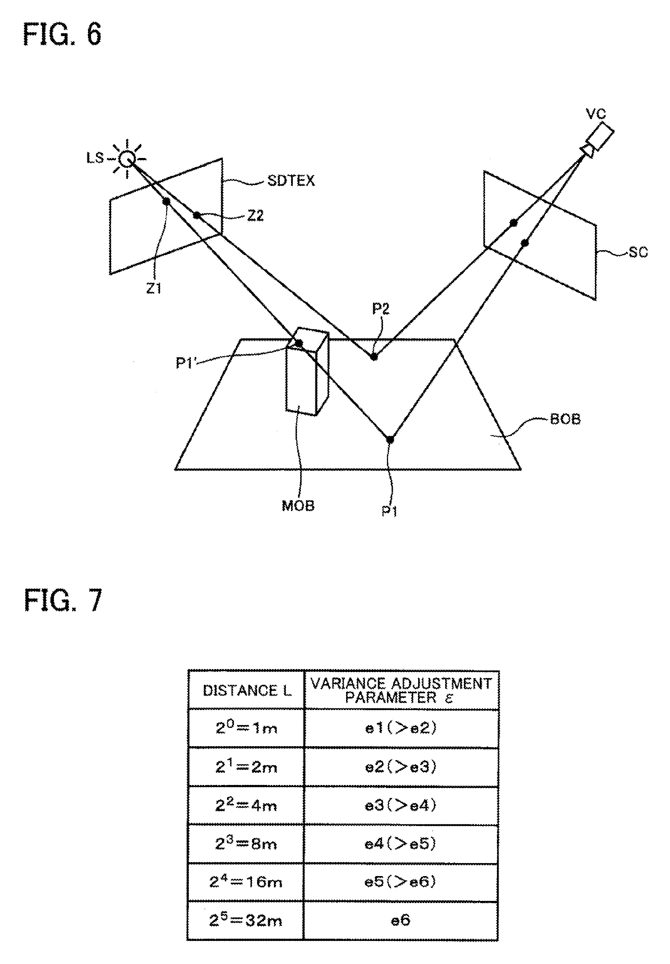

A shadow image cast on a model object (e.g., character) may be generated by the shadow map process, for example. The details of the shadow map process is described below with reference to FIG. 6.

In the shadow map process, the Z-value (depth value) of an object (e.g., model object MOB or background object BOB) viewed from a shadow generation light source LS is rendered to generate a shadow map texture SDTEX. Specifically, a virtual camera VC is set at the position of the light source LS to render the Z-value of the object. In FIG. 6, a Z-value Z1 at a point P1' of the model object MOB, a Z-value Z2 at a point P2 of the background object BOB, and the like are rendered to generate the shadow map texture SDTEX.

The virtual camera VC is then set at the viewpoint position for generating a field-of-view image displayed on a screen SC to render the objects such as the model object MOB and the background object BOB. In this case, the objects are rendered while comparing the Z-value of each pixel of each object with the Z-value of the corresponding texel of the shadow map texture SDTEX.

In FIG. 6, the Z-value (distance) at a point P1 viewed from the virtual camera VC is larger than the Z-value at the corresponding point P1' of the shadow map texture SDTEX. Therefore, the point P1 is determined to be shaded by the point P1' so that the shadow color (e.g., black) is drawn at the pixel corresponding to the point P1.

On the other hand, the Z-value at a point P2 viewed from the virtual camera VC is equal to the Z-value at the point P2 of the shadow map texture SDTEX, for example. Therefore, the point P2 is determined to be an unshaded area (point) so that the shadow color is not drawn at the pixel corresponding to the point P2.

A shadow of the model object MOB cast on the background, a self-shadow of the model object MOB, and the like can thus be generated.

A conventional shadow map process determines the shadow area based on a binary determination (i.e., "0" or "1"). Therefore, jaggies or the like occur to a large extent along the outline of the shadow (i.e., the boundary between the shadow area and an area other than the shadow area) so that the quality of the generated shadow image cannot be improved sufficiently.

It is desirable to employ a variance shadow map process in order to solve such a problem. The variance shadow map process calculates the probability (maximum probability) of being lit by utilizing the Chebyshev's inequality (probability theory). Specifically, since the variance shadow map process indicates the determination result (i.e., whether or not a pixel is in shadow) by the probability (maximum probability) (i.e., a real number in the range from 0 to 1), the probability can be directly set as the density of the shadow (i.e., the color of the shadow). Therefore, jaggies or the like that occur along the shadow image can be reduced as compared with a conventional shadow map process that performs a shadow determination process using a binary value (i.e., "0" (shadow area) or "1" (lit area).

For example, the Chebyshev's inequality that is the basic theorem of the probability theory is expressed by the following expression (1),

$$P\left(\left|x - \mu\right| \geq t\,\delta\right) \leq \frac{1}{t^2} \qquad (1)$$

where, x is the random variable in the probability distribution, $\mu$ is the mean, $\sigma$ is the variance, and t is an arbitrary real number larger than zero (t>0). When t=2, for example, a value that deviates from the mean $\mu$ by 2$\sigma$ or more in the probability distribution accounts for less than 1/4 of the probability distribution. Specifically, a probability that satisfies "x>$\mu$+2$\sigma$" or "x<$\mu$-2$\sigma$" accounts for less than 1/4 of the probability distribution.

The variance shadow map process utilizes the concept of the Chebyshev's inequality, and calculates moments M1 and M2 shown by the following expressions (2) and (3).

$$M1 = E(\mathrm{x}) = \int_{-\infty}^{\infty} xp(x)dx \qquad (2)$$

$$M2 = E(\mathrm{x}^2) = \int_{-\infty}^{\infty} \mathrm{x}^2 p(\mathrm{x})dx \qquad (3)$$

The mean $\mu$ and the variance $\sigma^2$ shown by the following expressions (4) and (5) are calculated from the expressions (2) and (3).

$$\mu = E(\mathrm{x}) = M1 \qquad (4)$$

$$\sigma^2 = E(\mathrm{x}^2) - E(\mathrm{x})^2 = M2 - M1^2 \qquad (5)$$

The following expression (6) is satisfied under a condition of $t > \mu$ according to the concept of the Chebyshev's inequality,

$$P(\mathrm{x} \geqq \mathrm{t}) \leqq \mathrm{p}\max(\mathrm{t}) = \frac{\sigma^2}{\sigma^2 + (\mathrm{t} - \mu)^2} \qquad (6)$$

where, t corresponds to the Z-value of the pixel, and x corresponds to the Z-value of the shadow map texture subjected to a blur process. The density (color) of the shadow is determined from the probability pmax(x).
This embodiment uses the following expression (7) obtained by transforming the expression (6),

$$P(\mathrm{x} \geqq \mathrm{t}) \leqq \mathrm{p}\max(\mathrm{t}) = \frac{\Sigma}{\Sigma + (\mathrm{t} - \mu)^2} \qquad (7)$$

where, $\Sigma$ is a value in which $\sigma^2 + \varepsilon$ is clamped within the range from 0 to 1.0 (i.e., adjusted variance).
$\varepsilon$ is a variance adjustment parameter (i.e., a parameter for adding a bias value to the variance $\sigma^2$). The degree of variance in the variance shadow map can be compulsorily increased by increasing the variance adjustment parameter $\varepsilon$. When the variance adjustment parameter $\varepsilon$ is set at zero, a noise pixel occurs in an area other than the shadow area. However, the noise pixel can be reduced by setting the variance adjustment parameter $\varepsilon$ at a value larger than zero.
For example, a conventional shadow map process renders only the Z-value. On the other hand, the variance shadow map process renders the square of the Z-value in addition to the Z-value to generate a shadow map texture in a two-channel buffer. The shadow map texture is subjected to a filter process (e.g., Gaussian filter) such as a blur process.
The moments M1 and M2 shown by the expressions (2) and (3) are calculated using the shadow map texture, and the mean (expected value) $\mu$ and the variance $\sigma^2$ shown by the expressions (4) and (5) are calculated. The adjusted variance $\Sigma$ is calculated based on the variance $\sigma^2$ and the variance adjustment parameter $\varepsilon$.
When the Z-value (depth) t of the pixel (fragment) is smaller than $\mu$, the pixel is determined to be positioned in an area other than the shadow area. When $t \geqq \mu$, the light attenuation factor is calculated based on the probability pmax (t) shown by the expression (7) to determine the density (color) of the shadow. Note that a value obtained by exponentiation of the probability pmax(x) (e.g., the fourth power of the probability pmax(x)) may be used instead of the probability pmax (x). For example, suppose that the Z-value t of the pixel is 0.50, the mean is 0.30, the variance adjustment parameter $\varepsilon$ is set at 0.00, and the adjusted variance $\Sigma$ is calculated to be 0.08.
In this case, pmax(t)=0.08/{0.08+(0.50-0.30)$^2$}=0.6666666... based on the expression (7).
When the variance adjustment parameter $\varepsilon$ is set at 0.01 and the adjusted variance $\Sigma$ is calculated to be 0.09, pmax(t)=0.09/{0.09+(0.50-0.30)$^2$}=0.6923076....

When the variance adjustment parameter $\varepsilon$ is set at 0.05 and the adjusted variance $\Sigma$ is calculated to be 0.13, $pmax(t)=0.13/\{0.13+(0.50-0.30)^2\}=0.7647058....$

Specifically, the light attenuation factor approaches 1.0 (specific attenuation) by increasing the variance adjustment parameter $\varepsilon$.

When the variance adjustment parameter $\varepsilon$ is small, noise occurs to a large extent along the outline of the shadow, for example. The noise is reduced by increasing the variance adjustment parameter $\varepsilon$ so that a smooth image is obtained. When the variance adjustment parameter $\varepsilon$ is further increased, the density of the shadow decreases along the outline of the shadow, for example. Therefore, it is desirable to adjust the variance adjustment parameter $\varepsilon$ within such a range that noise, a decrease in the density of the shadow, or the like does not occur to a large extent along the outline of the shadow.

FIG. 7 shows an example of a table used to calculate the variance adjustment parameter $\varepsilon$ based on the distance L between the virtual camera and the model object. In the table shown in FIG. 7, the variance adjustment parameters $\varepsilon$ (e1, e2, e3, e4, e5, and e6) are respectively assigned to the distances L (1 m, 2 m, 4 m, 8 m, 16 m, and 32 m). The relationship "e1>e2>e3>e4>e5>e6" is satisfied. Specifically, the variance adjustment parameter $\varepsilon$ increases as the distance L decreases. In FIG. 7, the distance L is decomposed into an exponent s and a mantissa k ($0 \leq k \leq 1.0$). The exponents s and s+1 of the distance L are input to the table shown in FIG. 7 to acquire the first and second parameters (e.g., e2 and e1) corresponding to the exponents s and s+1. The first and second parameters are interpolated using the mantissa k of the distance L. The table shown in FIG. 7 can be made compact by employing such an interpolation process.

The density of the shadow image (e.g., an image along the outline) can be decreased as the distance L between the virtual camera and the model object decreases (see FIGS. 2 to 4) by setting the variance adjustment parameter $\varepsilon$ as shown in FIG. 7. This effectively prevents a situation in which jaggies or the like occur to a large extent along the shadow image.

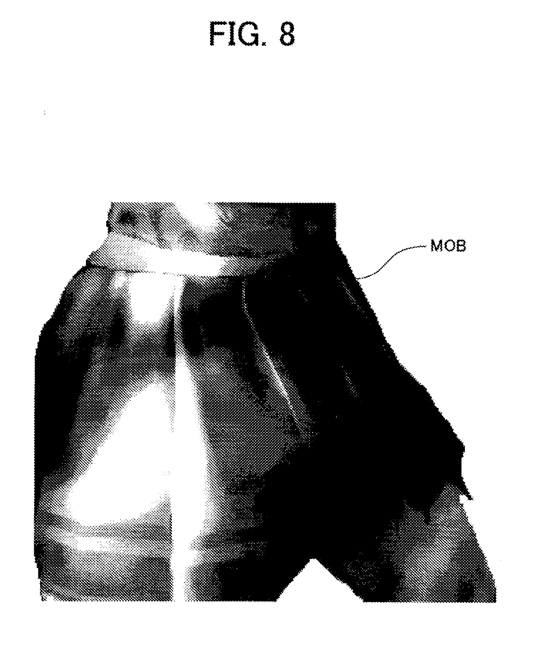

FIG. 8 shows an example of an image generated while moving the virtual camera closer to the model object MOB without setting the variance adjustment parameter $\varepsilon$ as shown in FIG. 7. In FIG. 8, since the density of the shadow is not decreased when the virtual camera is moved closer to the model object MOB, jaggies and noise occur to a large extent along the shadow image. This embodiment successfully solves such a problem by setting the variance adjustment parameter $\varepsilon$ as shown in FIG. 7, for example. 2.3 Method of controlling density of shadow corresponding to virtual camera control

Examples of a method of controlling the density of the shadow corresponding to virtual camera control are described below.

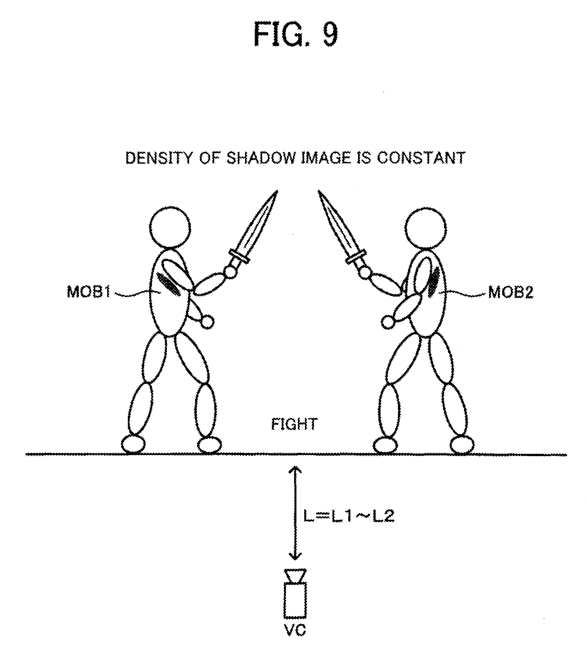

FIG. 9 shows an example in which first and second model objects MOB1 and MOB2 (characters) confront and fight against each other.

When the distance L between the virtual camera and the model objects MOB 1 and MOB2 has changed corresponding to a change in the distance between the model objects MOB1 and MOB2 in FIG. 9, it is not desirable that the density of the shadow image cast on each of the model objects MOB1 and MOB2 changes frequently.

Therefore, the dead zone indicated by B1 in FIG. 5B is provided, and the density of the shadow image is made constant when $L1 \leq L \leq L2$. This prevents a situation in which the shadow image flickers due to a small change in the distance L, for example.

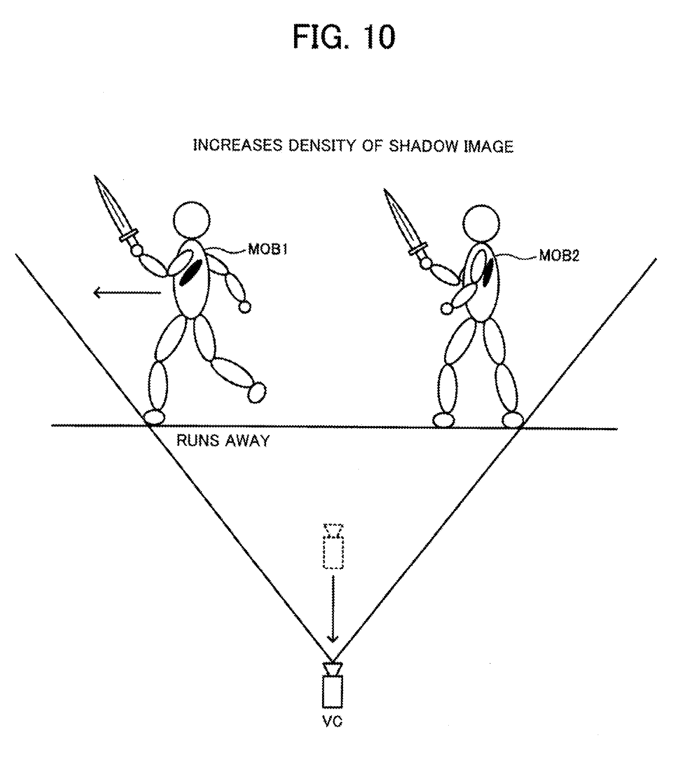

FIG. 10 shows an example in which a separation event in which the distance between the model objects MOB1 and MOB2 increases has occurred. Specifically, the model object MOB1 runs away for escape so that the distance between the model objects MOB1 and MOB2 increases.

When the separation event has occurred, the virtual camera VC is moved away from the model objects MOB1 and MOB2 so that the model objects MOB1 and MOB2 are positioned within the field of view range. When the distance between the virtual camera VC and the model objects MOB1 and MOB2 has increased due to the above camera control, the density of the shadow image is increased.

This prevents a situation in which the model objects MOB1 and MOB2 merge into the background when the distance between the virtual camera VC and the model objects MOB1 and MOB2 has increased so that the visibility of the model objects MOB1 and MOB2 is impaired, as described with reference to FIG. 2.

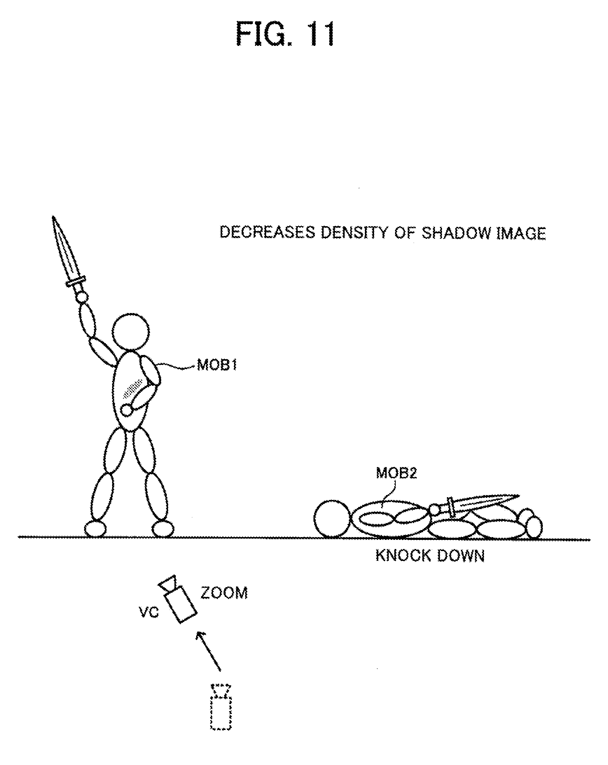

In FIG. 11, a zoom event in which the virtual camera VC zooms in the model object MOB1 has occurred, and the virtual camera VC is moved closer to the model object MOB1. Specifically, the model object MOB1 has defeated the model object MOB2, and the virtual camera VC is moved closer to the model object MOB1 so that the player can observe the victory pose of the model object MOB1.

When the distance between the virtual camera VC and the model object MOB1 has decreased due to the zoom event, the density of the shadow image cast on the model object MOB1 is decreased.

This prevents a situation in which jaggies or the like occur to a large extent along the shadow image when the distance between the virtual camera and the model object has decreased, as described with reference to FIG. 4. Therefore, the image quality when the virtual camera zooms in the model object can be improved so that virtual reality experienced by the player can be improved.

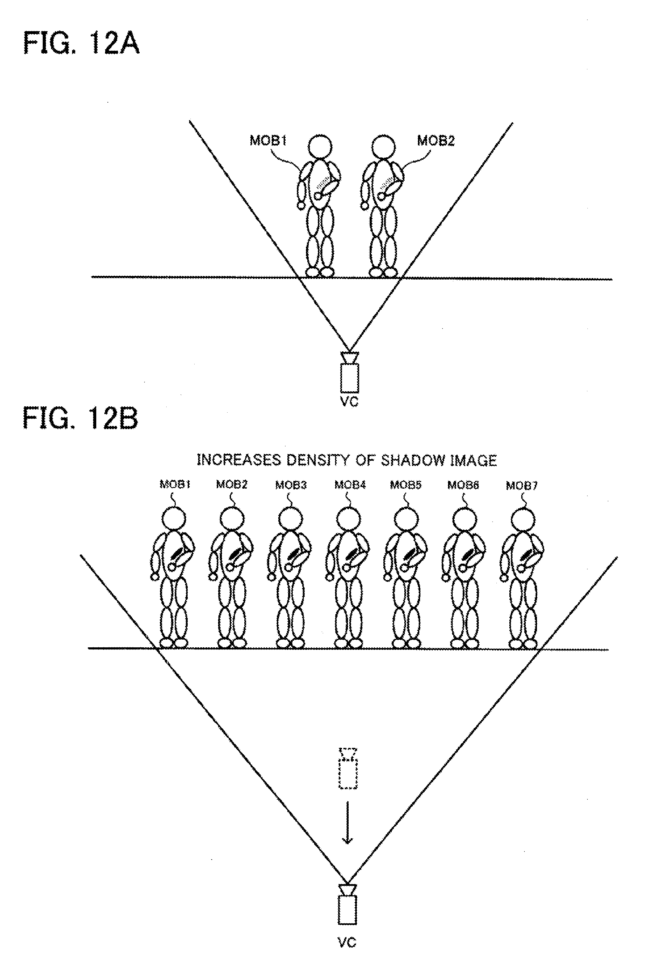

In FIGS. 12A and 12B, a model object count increase event in which the number of model objects positioned within the field of view of the virtual camera VC increases has occurred, and the virtual camera VC is moved away from the model objects. In FIG. 12A, two model objects MOB1 and MOB2 are displayed. In FIG. 12B, the number of model objects is increased (i.e., seven model objects MOB1 to MOB7 are displayed). In this case, the virtual camera VC is moved away from the model objects MOB1 to MOB7 so that the model objects MOB1 to MOB7 are positioned within the field of view of the virtual camera VC.

When the distance between the virtual camera VC and the model objects MOB1 to MOB7 has increased due to the model object count increase event, the density of the shadow image cast on each of the model objects MOB1 to MOB7 is increased.

This prevents a situation in which the model objects MOB1 to MOB7 merge into the background when the distance between the virtual camera VC and the model objects MOB1 to MOB7 has increased so that the visibility of the model objects MOB1 to MOB7 is impaired, as described with reference to FIG. 2.

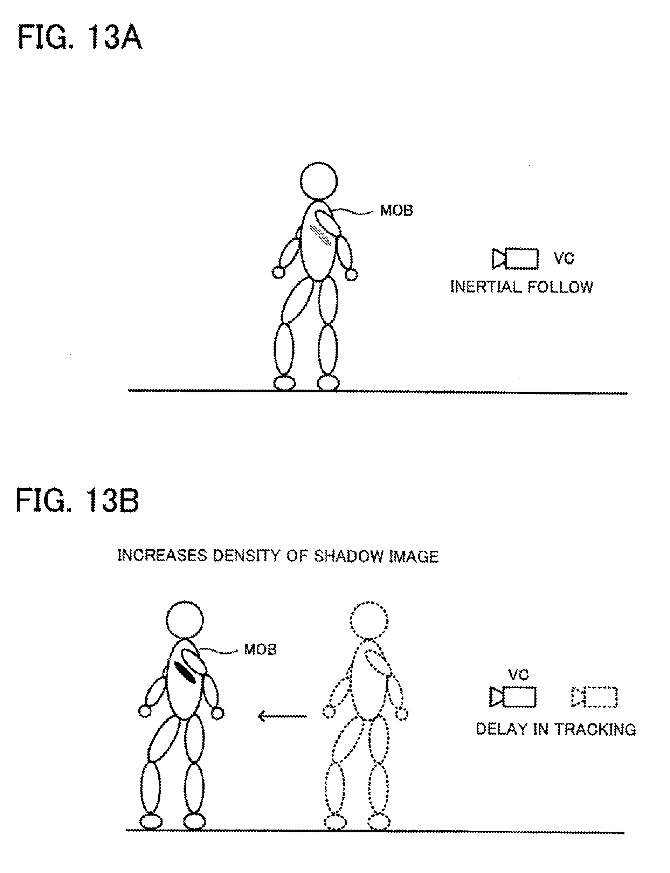

In FIG. 13A, the virtual camera VC is caused to inertially follow the movement of the model object MOB. Specifically, when the model object MOB has moved, the virtual camera VC follows to the model object MOB with a small time delay. A more natural field-of-view image can be generated by performing such camera control.

In FIG. 13B, the distance between the virtual camera VC and the model object MOB has increased due to a delay in tracking of the virtual camera VC. In this case, the density of the shadow image is increased.

This prevents a situation in which jaggies or the like occur to a large extent along the shadow image when the distance between the virtual camera and the model object has decreased, as described with reference to FIG. 4. Therefore, the image quality when the virtual camera zooms in the model object can be improved so that virtual reality experienced by the player can be improved.

An appropriate shadow image corresponding to virtual camera control can be generated by employing the method that controls the density of the shadow corresponding to various types of virtual camera control. Specifically, it is possible to effectively prevent a situation in which jaggies or the like occur along the shadow image when the virtual camera has approached the model object, and a situation in which the visibility and the solidity of the model object are impaired when the virtual camera moves away from the model object.

2.4 Specific processing example

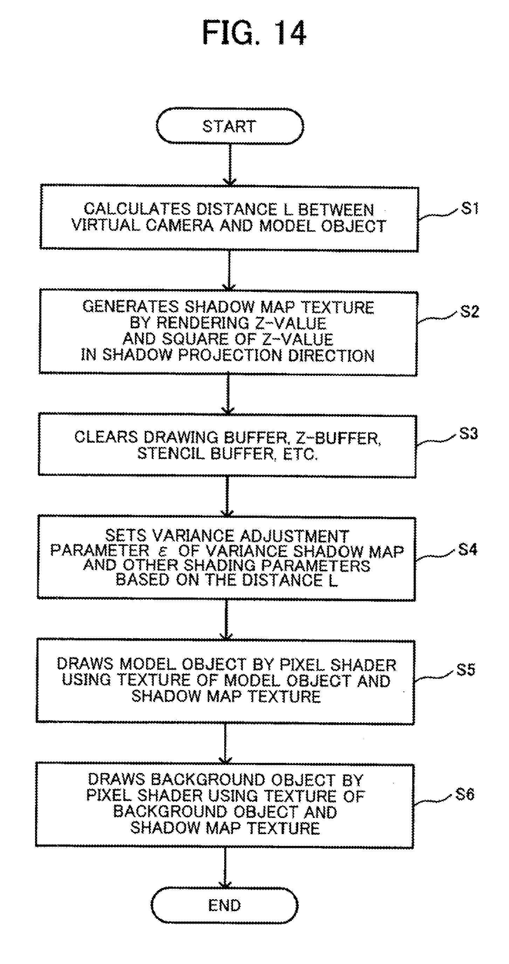

A specific processing example according to this embodiment is described below using a flowchart shown in FIG. 14.

The distance L between the virtual camera and the model object is calculated (step S1). Specifically, the distance L between the virtual camera and a representative point of the model object is calculated. The representative point may be set near the waist or chest of the model object, for example. The distance may be the linear distance between the virtual camera and the model object, or may be the depth distance or the like.

A shadow map texture is generated by rendering the Z-value and the square of the Z-value of each object in the shadow projection direction (shadow generation light source illumination direction) (step S2). When using a conventional shadow map process, the shadow map texture is generated by rendering only the Z-value.

The drawing buffer, the Z-buffer, the stencil buffer, and the like are cleared (step S3). The variance adjustment parameter $\varepsilon$ of the variance shadow map and other shading parameters (e.g., light source parameter) are set based on the distance L calculated in the step S1, as described with reference to FIG. 7 (step S4).

The model object is drawn by a pixel shader or the like using the texture of the model object (original picture texture) and the shadow map texture generated in the step S2 (step S5). Specifically, the model object (character) is drawn while setting the density (attenuation) of the shadow image by performing the process described with reference to the expressions (2) to (7).

The background object is drawn by a pixel shader or the like using the texture of the background object (original picture texture) and the shadow map texture (step S6). Specifically, the background object is drawn while setting the density (attenuation) of the shadow image by performing the process described with reference to the expressions (2) to (7).

Since the background object is drawn (step S6) after drawing the model object (step S5), it is unnecessary to draw the background object in the drawing area of the model object. Therefore, since the drawing process is not performed an unnecessary number of times, a situation in which the object cannot be drawn within one frame can be prevented. In particular, it is effective to perform the drawing process in the order indicated by the steps S5 and S6 when the model object occupies a large area of the entire screen.

3. Hardware configuration

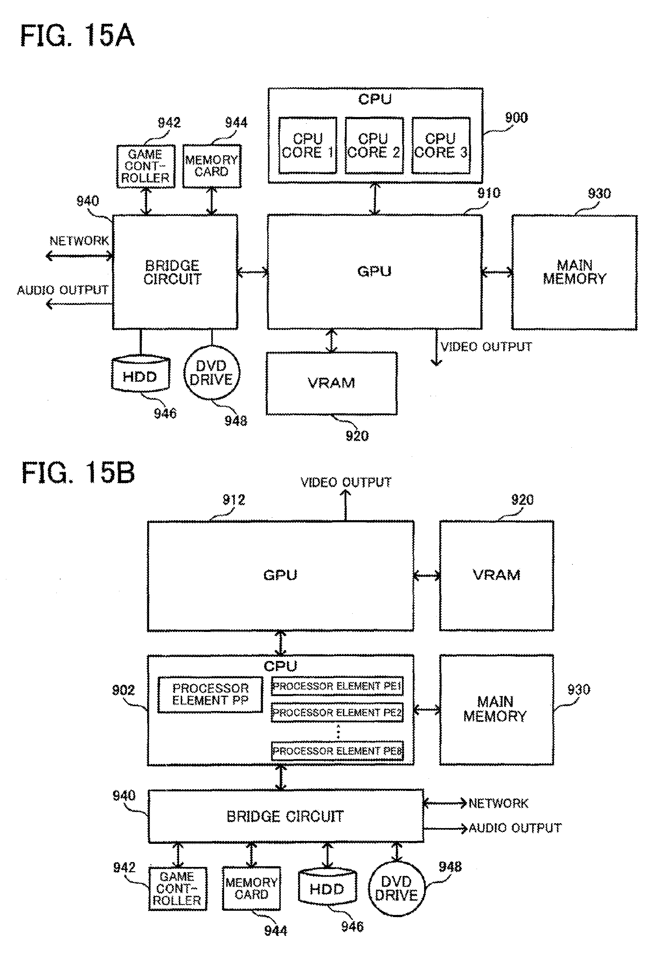

FIG. 15A shows a hardware configuration example that can implement this embodiment.

A CPU 900 (main processor) is a multi-core processor including a CPU core 1, a CPU core 2, and a CPU core 3. The CPU 900 also includes a cache memory (not shown). Each of the CPU cores 1, 2, and 3 includes a vector calculator and the like. Each of the CPU cores 1, 2, and 3 can perform two H/W thread processes in parallel without requiring a context switch, for example (i.e., a multi-thread function is supported by hardware). Therefore, the CPU cores 1, 2, and 3 can perform six H/W thread processes in parallel.

A GPU 910 (drawing processor) performs a vertex process and a pixel process to implement a drawing (rendering) process. Specifically, the GPU 910 creates or changes vertex data or determines the drawing color of a pixel (fragment) according to a shader program. When an image corresponding to one frame has been written into a VRAM 920 (frame buffer), the image is displayed on a display such as a TV through a video output. Amain memory 930 functions as a work memory for the CPU 900 and the GPU 910. The GPU 910 performs a plurality of vertex threads and a plurality of pixel threads in parallel (i.e., a drawing process multi-thread function is supported by hardware). The GPU 910 includes a hardware tessellator. The GPU 910 is a unified shader type GPU in which a vertex shader and a pixel shader are not distinguished in terms of hardware.

A bridge circuit 940 (south bridge) is a circuit that controls the distribution of information inside the system. The bridge circuit 940 includes a controller such as a USB controller (serial interface), a network communication controller, an IDE controller, or a DMA controller. An interface function with a game controller 942, a memory card 944, an HDD 946, and a DVD drive 948 is implemented by the bridge circuit 940.

The hardware configuration that can implement this embodiment is not limited to the configuration shown in FIG. 15A. For example, a configuration shown in FIG. 15B may also be employed.

In FIG. 15B, a CPU 902 includes a processor element PP and eight processor elements PE1 to PE8. The processor element PP is a general-purpose processor core. The processor elements PE1 to PE8 are processor cores having a relatively simple configuration. The processor element PP differs in architecture from the processor elements PE1 to PE8. The processor elements PE1 to PE8 are SIMD processor cores that can simultaneously perform an identical process on a plurality of pieces of data by one instruction. This makes it possible to efficiently perform a multimedia process such as a streaming process. The processor element PP can perform two H/W thread processes in parallel. Each of the processor elements PE1 to PE8 can perform a single H/W thread process. Therefore, the CPU 902 can perform ten H/W thread processes in parallel.

In FIG. 15B, a GPU 912 and the CPU 902 cooperate in a close manner. Therefore, the GPU 912 can directly perform a rendering process using the main memory 930 connected to the CPU 902. Moreover, the CPU 902 can easily perform a geometric process and transfer vertex data, or data can be easily returned to the CPU 902 from the GPU 912. The CPU 902 can also easily perform a rendering pre-processing process and a rendering post-processing process. Specifically, the CPU 902 can perform a tessellation (surface division) or dot-filling. For example, the CPU 902 may perform a process with a high abstraction level, and the GPU 912 may perform a detailed process with a low abstraction level.

When implementing the process of each section according to this embodiment by hardware and a program, a program that causes hardware (computer) to function as each section according to this embodiment is stored in the information storage medium. Specifically, the program instructs the processors (CPU and GPU) (hardware) to perform the process, and transfers data to the processors, if necessary. The processors implement the process of each section according to this embodiment based on the instructions and the transferred data.

Although some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention. Any term (e.g., character) cited with a different term (e.g., model object) having a broader meaning or the same meaning at least once in the specification and the drawings may be replaced by the different term in any place in the specification and the drawings.

The process that calculates the distance between the virtual camera and the model object, the model object drawing process, the process that generates the shadow image cast on the model object,the shadow map process, the variance shadow map process, the camera control process, and the like are not limited to those described relating to the above embodiments. Methods equivalent to the above-described methods are also included within the scope of the invention. The invention may be applied to various games. The invention may be applied to various image generation systems such as an arcade game system, a consumer game system, a large-scale attraction system in which a number of players participate, a simulator, a multimedia terminal, a system board that generates a game image, and a portable telephone.

**Claims**

1. An image generation system that generates an image viewed from a virtual camera in an object space, the image generation system comprising:

a virtual camera control section that controls the virtual camera;

a distance calculation section that calculates a distance between the virtual camera and a model object; and

a drawing section that draws a plurality of objects including the model object,

the drawing section decreasing a density of a shadow image as the distance between the virtual camera and the model object decreases, the shadow image showing a self-shadow or a shadow of another object cast on the model object.

2. The image generation system as defined in claim 1,

the drawing section generating the shadow image cast on the model object by a shadow map process.

3. The image generation system as defined in claim 2,

the drawing section setting a variance adjustment parameter of a variance shadow map process based on the distance between the virtual camera and the model object, and generating the shadow image cast on the model object by the variance shadow map process.

4. The image generation system as defined in claim 3,

the drawing section setting the variance adjustment parameter so that a variance of the variance shadow map process increases as the distance between the virtual camera and the model object decreases, the variance being used in calculation that obtains the density of the shadow image in the variance shadow map process.

5. The image generation system as defined in any one of claims 1 to 4,

the drawing section decreasing the density of the shadow image as a distance L between the virtual camera and the model object decreases when the distance L is shorter than a first distance L1,

the drawing section increasing the density of the shadow image as the distance L increases when the distance L is longer than a second distance L2, and

the drawing section making the density of the shadow image constant irrespective of the distance between the virtual camera and the model object when the distance L satisfies a relationship "$L1 \leq L \leq L2$".

6. The image generation system as defined in any one of claims 1 to 5,

the virtual camera control section moving the virtual camera away from a first model object and a second model object when a separation event has occurred, the separation event being an event in which a distance between the first model object and the second model object increases, and

the drawing section increasing the density of the shadow image when the separation event has occurred and a distance between the virtual camera and the first model object and the second model object has increased.

7. The image generation system as defined in any one of claims 1 to 5,

the virtual camera control section moving the virtual camera closer to the model object when a zoom event has occurred, the zoom event being an event in which the virtual camera zooms in the model object, and

the drawing section decreasing the density of the shadow image when the zoom event has occurred and the distance between the virtual camera and the model object has decreased.

8. The image generation system as defined in any one of claims 1 to 5,

the virtual camera control section moving the virtual camera away from a plurality of model objects when a model object count increase event has occurred, the model object count increase event being an event in which the number of model objects positioned within a field of view of the virtual camera increases, and

the drawing section increasing the density of the shadow image when the model object count increase event has occurred and the distance between the virtual camera and the model object has increased.

9. The image generation system as defined in any one of claims 1 to 5,

the virtual camera control section causing the virtual camera to inertially follow movement of the model object, and

the drawing section increasing the density of the shadow image when the distance between the virtual camera and the model object has increased due to a delay in tracking of the virtual camera.

10. An image generation method that generates an image viewed from a virtual camera in an object space, the image generation method comprising:

controlling the virtual camera;

calculating a distance between the virtual camera and a model object;

drawing a plurality of objects including the model object; and
decreasing a density of a shadow image as the distance between the virtual camera and the model object decreases, the shadow image showing a self-shadow or a shadow of another object cast on the model object.

**11.** The image generation method as defined in claim 10, further comprising:

generating the shadow image cast on the model object by a shadow map process.

**12.** The image generation method as defined in claim 11, further comprising:

setting a variance adjustment parameter of a variance shadow map process based on the distance between the virtual camera and the model object; and
generating the shadow image cast on the model object by the variance shadow map process.

**13.** The image generation method as defined in claim 12, further comprising:

setting the variance adjustment parameter so that a variance of the variance shadow map process increases as the distance between the virtual camera and the model object decreases, the variance being used in calculation that obtains the density of the shadow image in the variance shadow map process.

**14.** The image generation method as defined in any one of claims 10 to 13, further comprising:

decreasing the density of the shadow image as a distance L between the virtual camera and the model object decreases when the distance L is shorter than a first distance L1;
increasing the density of the shadow image as the distance L increases when the distance L is longer than a second distance L2; and
making the density of the shadow image constant irrespective of the distance between the virtual camera and the model object when the distance L satisfies a relationship "L1≤L≤L2".

**15.** The image generation method as defined in any one of claims 10 to 14, further comprising:

moving the virtual camera away from a first model object and a second model object when a separation event has occurred, the separation event being an event in which a distance between the first model object and the second model object increases; and
increasing the density of the shadow image when the separation event has occurred and a distance between the virtual camera and the first model object and the second model object has increased.

**16.** The image generation method as defined in any one of claims 10 to 14, further comprising:

moving the virtual camera closer to the model object when a zoom event has occurred, the zoom event being an event in which the virtual camera zooms in the model object; and
increasing the density of the shadow image when the zoom event has occurred and the distance between the virtual camera and the model object has decreased.

**17.** The image generation method as defined in any one of claims 10 to 14, further comprising:

moving the virtual camera away from a plurality of model objects when a model object count increase event has occurred, the model object count increase event being an event in which the number of model objects positioned within a field of view of the virtual camera increases ; and
increasing the density of the shadow image when the model object count increase event has occurred and the distance between the virtual camera and the model object has increased.

**18.** The image generation method as defined in any one of claims 10 to 14, further comprising:

causing the virtual camera to inertially follow movement of the model object; and
increasing the density of the shadow image when the distance between the virtual camera and the model object has increased due to a delay in tracking of the virtual camera.

**19.** A computer-readable information storage medium storing a program that causes a computer to execute the image generation method as defined in any one of claims 10 to 18.

# FIG. 1

PROCESSING SECTION — 100

- GAME CALCULATION SECTION — 102
- OBJECT SPACE SETTING SECTION — 104
- MOVING OBJECT CALCULATION SECTION — 106
- VIRTUAL CAMERA CONTROL SECTION — 108
- DISTANCE CALCULATION SECTION — 109
- DRAWING SECTION — 120
- SOUND GENERATION SECTION — 130

OPERATION SECTION — 160

STORAGE SECTION — 170
- OBJECT DATA STORAGE SECTION — 172
- MOTION DATA STORAGE SECTION — 173
- TEXTURE STORAGE SECTION — 174
- DRAWING BUFFER — 176
- Z-BUFFER — 177

INFORMATION STORAGE MEDIUM — 180

DISPLAY SECTION — 190

SOUND OUTPUT SECTION — 192

AUXILIARY STORAGE DEVICE (AUXILIARY MOMERY) — 194

COMMUNICATION SECTION — 196

EP 2 158 948 A2

FIG. 2

EP 2 158 948 A2

FIG. 3

FIG. 4

## FIG. 5A

## FIG. 5B

EP 2 158 948 A2

## FIG. 6

## FIG. 7

| DISTANCE L | VARIANCE ADJUSTMENT PARAMETER $\varepsilon$ |
|---|---|
| $2^0 = 1m$ | e1($>$e2) |
| $2^1 = 2m$ | e2($>$e3) |
| $2^2 = 4m$ | e3($>$e4) |
| $2^3 = 8m$ | e4($>$e5) |
| $2^4 = 16m$ | e5($>$e6) |
| $2^5 = 32m$ | e6 |

# FIG. 8

MOB

# FIG. 9

DENSITY OF SHADOW IMAGE IS CONSTANT

# FIG. 10

INCREASES DENSITY OF SHADOW IMAGE

MOB1

RUNS AWAY

MOB2

VC

# FIG. 11

DECREASES DENSITY OF SHADOW IMAGE

MOB1

MOB2

KNOCK DOWN

ZOOM

VC

## FIG. 12A

## FIG. 12B

INCREASES DENSITY OF SHADOW IMAGE

## FIG. 13A

MOB

VC
INERTIAL FOLLOW

## FIG. 13B

INCREASES DENSITY OF SHADOW IMAGE

MOB

VC
DELAY IN TRACKING

# FIG. 14

START

CALCULATES DISTANCE L BETWEEN VIRTUAL CAMERA AND MODEL OBJECT — S1

GENERATES SHADOW MAP TEXTURE BY RENDERING Z-VALUE AND SQUARE OF Z-VALUE IN SHADOW PROJECTION DIRECTION — S2

CLEARS DRAWING BUFFER, Z-BUFFER, STENCIL BUFFER, ETC. — S3

SETS VARIANCE ADJUSTMENT PARAMETER $\varepsilon$ OF VARIANCE SHADOW MAP AND OTHER SHADING PARAMETERS BASED ON THE DISTANCE L — S4

DRAWS MODEL OBJECT BY PIXEL SHADER USING TEXTURE OF MODEL OBJECT AND SHADOW MAP TEXTURE — S5

DRAWS BACKGROUND OBJECT BY PIXEL SHADER USING TEXTURE OF BACKGROUND OBJECT AND SHADOW MAP TEXTURE — S6

END

## FIG. 15A

## FIG. 15B

**REFERENCES CITED IN THE DESCRIPTION**

**Patent documents cited in the description**

- JP 2003242523 A